# EUROPEAN PATENT APPLICATION

(11) **EP 3 127 587 A1**
(43) Date of publication of application: **08.02.2017**
(21) Application number: 16182337.2
(22) Date of filing: 02.08.2016
(51) Int. Cl.: A63F 13/30

(54) **VIRTUAL CARD PLAY BASED INTERACTIVE GAMING EXPERIENCES**

(30) Priority: 04.08.2015 US 201562201004 P; 29.07.2016 US 201615224427
(71) Applicant: Hothead Games, Inc., Vancouver, British Columbia V6G 2T1 (CA)
(72) Inventor: Nielsen, Scott, Vancouver, British Columbia V6G 2T1 (CA); Ip, Jamie, Vancouver, British Columbia V6G 2T1 (CA); Inglehart, Mike, Vancouver, British Columbia V6G 2T1 (CA)
(74) Representative: Käck, Stefan

(57) **Abstract**

Virtual card play based interactive gaming experiences are described herein. Some methods include selecting (1205) one or more skills for each of the pair of virtual cards, conducting (1210) a virtual card battle using the pair of virtual cards that includes a comparative analysis of the pair or virtual cards using the one or more skills for each of the pair of virtual cards to establish a differential value, and creating (1220) a virtual activity having a selected difficulty level, using the differential value. The virtual activity is an interactive version of the virtual card battle.

## Description

### FIELD OF THE PRESENT TECHNOLOGY

The present technology relates generally to virtual gaming, and more specifically, but not by limitation, to systems and methods that provide a multifaceted interactive gaming experience where, in some embodiments, a virtual card battle occurs. The outcome of the virtual card battle affects a difficulty level of a challenge or activity within the game.

### SUMMARY

The invention is defined in claim 1. Particular embodiments are set out in the dependent claims.

In particular, the present disclosure is directed to a method comprising: (a) receiving a selection of at least one of a pair of virtual cards for a virtual card battle; (b) selecting one or more skills for each of the pair of virtual cards; (c) executing a virtual card battle by performing a comparative analysis using the one or more skills to calculate a differential value; (d) using the differential value to select a plurality of attributes for a virtual activity, wherein the virtual activity is an interactive version of the virtual card battle; and (e) providing the virtual activity with the plurality of attributes to a player of the virtual card battle.

Further, the present disclosure is directed to a method comprising: (a) receiving a selection of first party virtual cards; (b) receiving a selection of second party virtual cards; (c) selecting a pair of virtual cards for a virtual card battle, the pair of virtual cards comprising one of the first party virtual cards and one of the second party virtual cards; (d) selecting one or more skills for each of the pair of virtual cards; (e) performing a comparative analysis of the pair or virtual cards using the one or more skills for each of the pair of virtual cards to establish a differential value; and (f) selecting a plurality of attributes for a virtual activity using the differential value, wherein the virtual activity is an interactive version of the virtual card battle.

The present disclosure is also directed to a method comprising: (a) selecting one or more skills for each of the pair of virtual cards, wherein the one or more skills each having a skill value; (b) randomly selecting a virtual card battle type for a virtual card battle; (c) conducting the virtual card battle using the pair of virtual cards that comprises a comparative analysis of the pair or virtual cards using the one or more skills for each of the pair of virtual cards to establish a differential value; and (d) creating a virtual activity having a selected difficulty level, using the differential value, wherein the virtual activity is an interactive version of the virtual card battle.

### BRIEF DESCRIPTION OF THE DRAWINGS

Certain embodiments of the present technology are illustrated by the accompanying figures. It will be understood that the figures are not necessarily to scale and that details not necessary for an understanding of the technology or that render other details difficult to perceive may be omitted. It will be understood that the technology is not necessarily limited to the particular embodiments illustrated herein.
FIG. 1 is a schematic diagram of an exemplary computing architecture that can be used to practice aspects of the present technology.
FIG. 2 is a screenshot of an example graphical user interface (GUI) that illustrates selections of virtual cards for one or more virtual card battles.
FIG. 3 is a screenshot of an example GUI that illustrates differential scores for a portion of the virtual card battles for various pairs of virtual cards.
FIG. 4 is a screenshot of an example GUI that illustrates skill values for each of the virtual cards.
FIG. 5 is a screenshot of an example GUI that illustrates differential scores for all pairs of virtual cards matched together for virtual card battles.
FIG. 6 is a screenshot of an example GUI that illustrates a virtual activity initiation screen.
FIG. 7 is a screenshot of an example GUI that illustrates a head-to-head matchup for a virtual card battle.
FIG. 8 is a screenshot of an example GUI that illustrates a player selected for the virtual activity based on the virtual card battle, the differential score calculated for the virtual card battle, and the difficulty level selected for the virtual activity based on the differential value.
FIG. 9 is a screenshot of an example GUI that illustrates a target sizing for the virtual activity.
FIG. 10 is a screenshot of an example GUI that illustrates player participation in the virtual activity. The virtual activity is configured for difficulty based on the differential value of the virtual card battle.
FIG. 11 is a flowchart of an example method of the present disclosure.
FIG. 12 is a flowchart of another example method of the present disclosure.
FIG. 13 is a schematic diagram of an example computing device that can be used to implement aspects of the present technology.

### DESCRIPTION OF EXEMPLARY EMBODIMENTS

While this technology is susceptible of embodiment in many different forms, there is shown in the drawings and will herein be described in detail several specific embodiments with the understanding that the present disclosure is to be considered as an exemplification of the principles of the technology and is not intended to limit the technology to the embodiments illustrated.

The terminology used herein is for the purpose of describing particular embodiments only and is not intended to be limiting of the technology. As used herein, the singular forms "a", "an" and "the" are intended to include the plural forms as well, unless the context clearly indicates otherwise. It will be further understood that the terms "comprises" and/or "comprising", when used in this specification, specify the presence of stated features, integers, steps, operations, elements, and/or components, but do not preclude the presence or addition of one or more other features, integers, steps, operations, elements, components, and/or groups thereof.

It will be understood that like or analogous elements and/or components, referred to herein, may be identified throughout the drawings with like reference characters. It will be further understood that several of the figures are merely schematic representations of the present technology. As such, some of the components may have been distorted from their actual scale for pictorial clarity.

The present technology is directed to systems and methods for providing virtual game experiences. In some embodiments, the virtual game experience comprises both a virtual card battle and a virtual game activity. According to some embodiments, initial conditions for the virtual game activity are based, in part, on an outcome of the virtual card battle. In one embodiment, the initial conditions refer to a difficulty level for the virtual game activity.

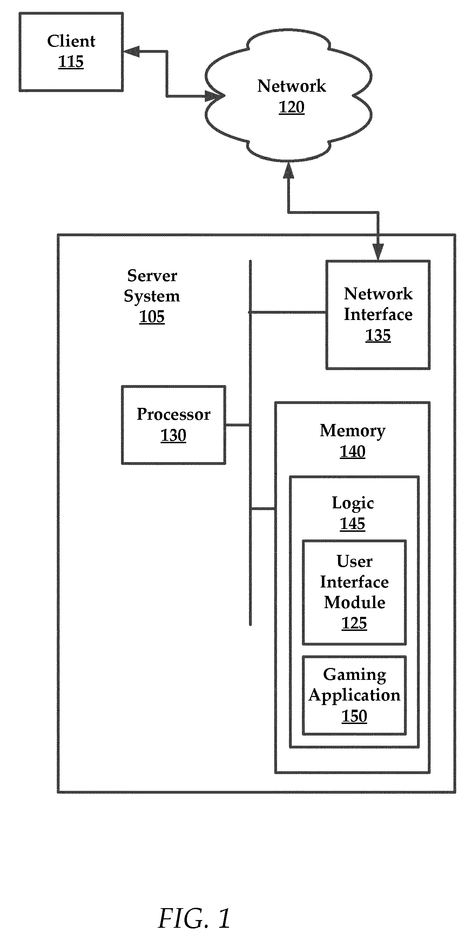

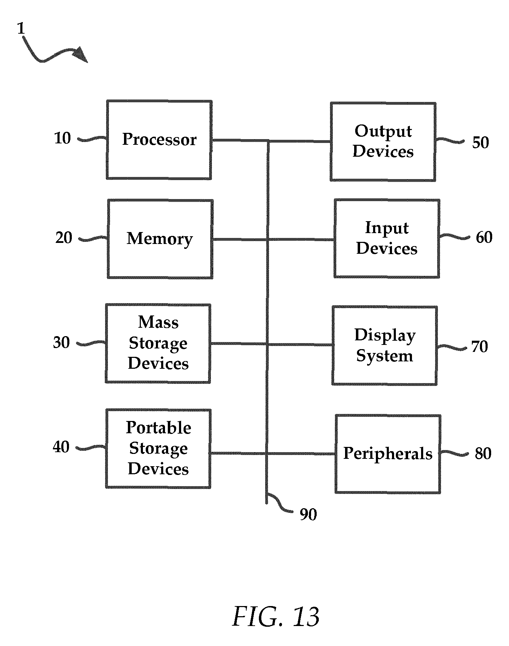

FIG. 1 illustrates an exemplary architecture for practicing aspects of the present technology. The architecture comprises a server system, hereinafter "system 105" that is configured to provide various functionalities, which are described in greater detail throughout this document. Generally the system 105 is configured to communicate with client devices, such as client 115. The client 115 may include, for example, a Smartphone, a laptop, a computer, or other similar computing device. An example of a computing device that can be utilized in accordance with the present technology is described in greater detail with respect to FIG. 13.

The system 105 may communicatively couple with the client 115 via a public or private network, such as network 120. Suitable networks may include or interface with any one or more of, for instance, a local intranet, a PAN (Personal Area Network), a LAN (Local Area Network), a WAN (Wide Area Network), a MAN (Metropolitan Area Network), a virtual private network (VPN), a storage area network (SAN), a frame relay connection, an Advanced Intelligent Network (AIN) connection, a synchronous optical network (SONET) connection, a digital T1, T3, E1 or E3 line, Digital Data Service (DDS) connection, DSL (Digital Subscriber Line) connection, an Ethernet connection, an ISDN (Integrated Services Digital Network) line, a dial-up port such as a V.90, V.34 or V.34bis analog modem connection, a cable modem, an ATM (Asynchronous Transfer Mode) connection, or an FDDI (Fiber Distributed Data Interface) or CDDI (Copper Distributed Data Interface) connection. Furthermore, communications may also include links to any of a variety of wireless networks, including WAP (Wireless Application Protocol), GPRS (General Packet Radio Service), GSM (Global System for Mobile Communication), CDMA (Code Division Multiple Access) or TDMA (Time Division Multiple Access), cellular phone networks, GPS (Global Positioning System), CDPD (cellular digital packet data), RIM (Research in Motion, Limited) duplex paging network, Bluetooth radio, or an IEEE 802.11-based radio frequency network. The network 120 can further include or interface with any one or more of an RS-232 serial connection, an IEEE-1394 (Firewire) connection, a Fiber Channel connection, an IrDA (infrared) port, a SCSI (Small Computer Systems Interface) connection, a USB (Universal Serial Bus) connection or other wired or wireless, digital or analog interface or connection, mesh or Digi® networking.

The system 105 generally comprises a processor 130, a network interface 135, and a memory 140. According to some embodiments, the memory 140 comprises logic (e.g., instructions) 145 that can be executed by the processor 130 to perform various methods. For example, the logic may include a video game client application (hereinafter "gaming application 150"), which is configured to provide the functionalities described in greater detail herein.

It will be understood that the functionalities described herein, which are attributed to the system 105, may also be executed within the client 115. That is, the client 115 may be programmed to execute the functionalities described herein. In other instances, the system 105 and client 115 may cooperate to provide the functionalities described herein, such that the client 115 is provided with a client-side application that interacts with the system 105 such that the system 105 and client 115 operate in a client/server relationship. Complex computational features may be executed by the server 105, while simple operations that require fewer computational resources may be executed by the client 115, such as data gathering and data display.

In general, a user interface module 125 may be executed by the system 105 to provide various graphical user interfaces (GUIs) that allow users to interact with the system 105. In some instances, GUIs are generated by execution of the application 150. Users may interact with the system 105 using, for example, a client 115. The system 105 may generate web-based interfaces for the client.

The application 150 can be executed locally on a user device (e.g., client 115), such as a Smartphone or tablet device. Alternatively, the application 150 can be accessed by a user device over a network. Thus, the application 150 can be executed on a server and accessed by the user device using a browser application. The server will serve GUIs of the applications 150 as web pages of a standard or mobile website.

In some embodiments, the gaming application 150 is configured to provide the user with a gaming experience, such as a virtual gaming environment where the user participates in gameplay. Examples of virtual gaming environments include, but are not limited to, role playing games, first person shooter games, multiplayer games, sporting games, and so forth.

The gaming application 150 is configured to provide both virtual card battles and virtual game activities, which are based, at least in part, on the outcome of the virtual card battles.

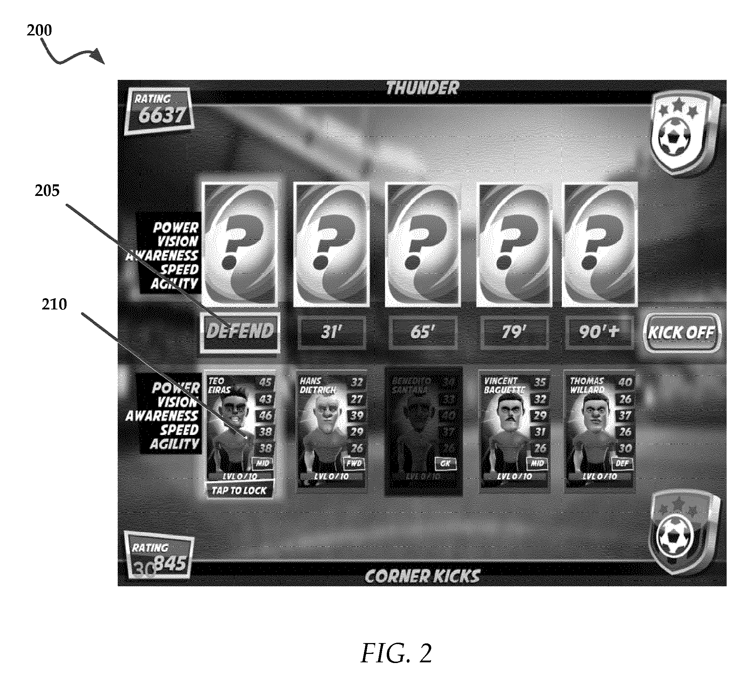

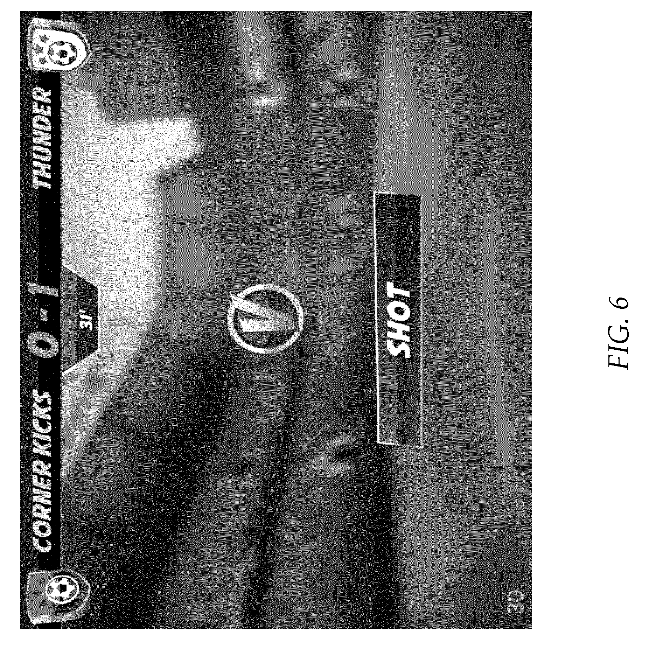

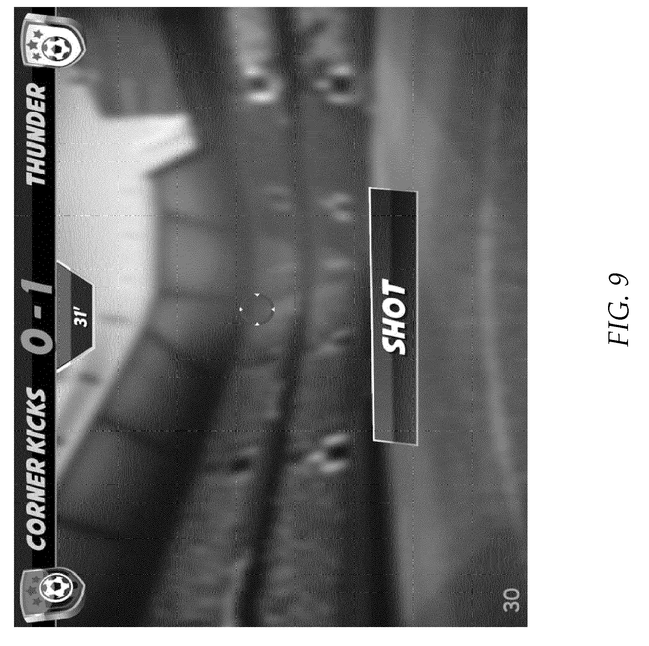

The following FIGS. 2-11 comprise example screenshots of both a virtual card battle and a virtual game activity. It is noteworthy to mention that these illustrations are merely exemplary and the logic and/or algorithms enabling the virtual card game based, virtual activities can be extended to other virtual game experiences.

Turning now to FIG. 2, a first player is provided with a plurality of cards for a first football team. The gaming application 150 is configured to implement the virtual game to randomly select one or more skills such as power, vision, awareness, speed, and agility - just to name a few. These skills are pitted against similar or dissimilar skills for the players of a second football team displayed above the plurality of cards for the first football team. The user can select whether the player is an offensive player or a defensive player by selecting defend for a defenseman, or shot for an offensive player. In some embodiments, the GUI 200 can include a selectable button 205 that the player can toggle to switch between shot and defend selections.

In detail, the virtual card 210 Teo Eiras is provided with a plurality of skill values, such as Power, 45; Vision, 43; Awareness, 46; Speed, 38; and Agility, 38. Each virtual card will have its own permutations of skill values. These skill values are utilized in the comparative calculations described herein to determining differential values.

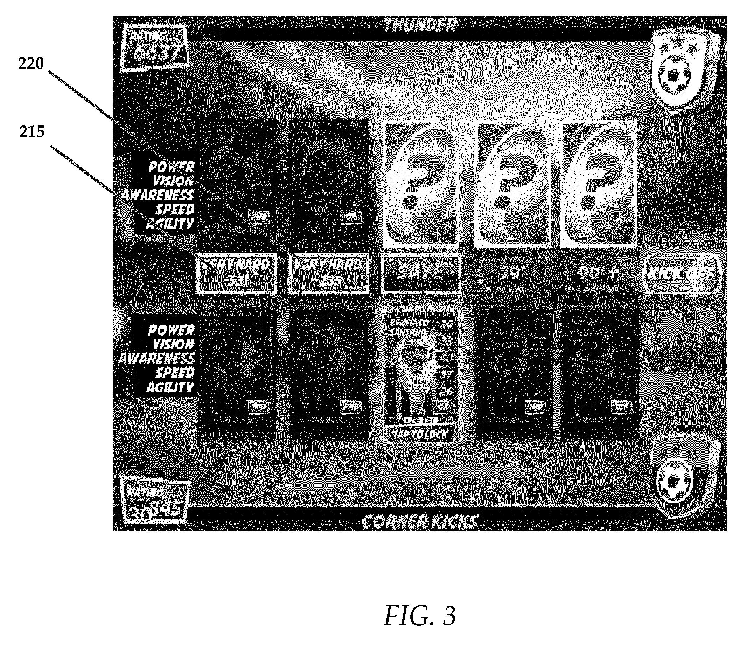

In FIG. 3, a virtual card is highlighted for selection by a player. The player can scroll through cards for selection in some embodiments. In other embodiments, the virtual cards can be randomly selected by the application 150. In this embodiment, the player selects their virtual card for a third pairing. The virtual card that is randomly selected by the application 150 is blocked out with a question mark until the player has selected their virtual card.

Two card battle comparisons have been conducted and differential values calculated. In a first pairing, the differential value 215 is -531, and a second differential value for a second pairing is -235.

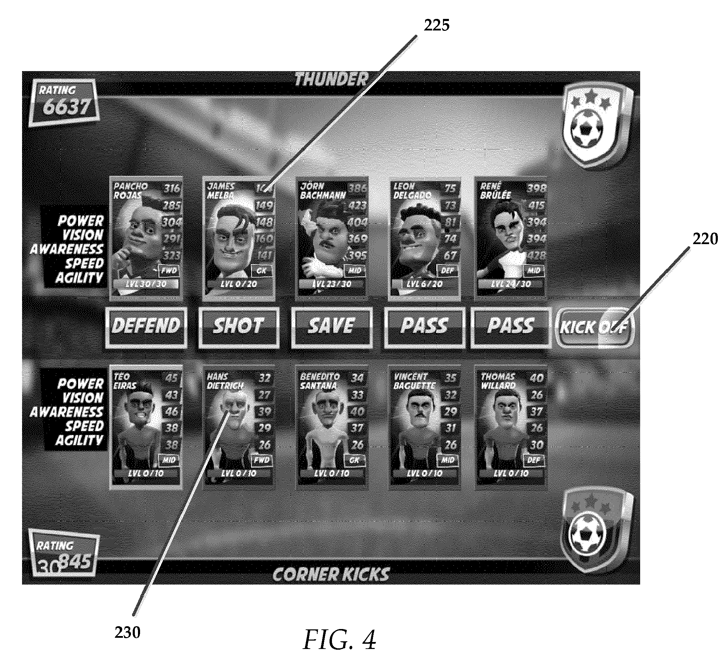

FIG. 4 illustrates numerous virtual card battle pairs. The player can select the kick off button 220 to execute the virtual card battles.

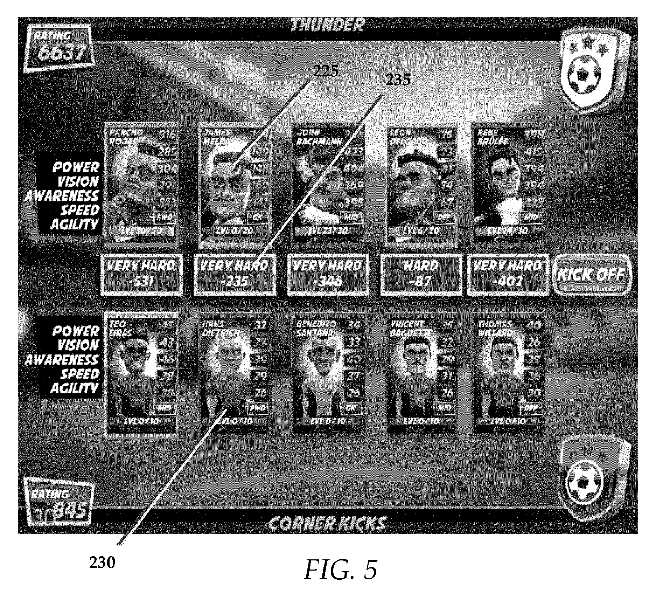

The user can select a card (or the virtual card can be randomly selected by the system) for use in a virtual card battle. Once each player has selected their virtual cards, the teams are aligned as illustrated in FIG. 4. In FIG. 5, the outcome of each of the virtual card battles is displayed in place of the selectable button that allows the player to select defense or shot as in FIG. 2. The player can select which of the virtual card battle pairings that they desire to utilize as the basis for a virtual activity.

In some embodiments, the gaming application 150 is configured to display a difficulty calculation for each possible virtual card matchup. For example, a virtual card 225 of James Melba of the second football team would match up against a virtual card 230 of Hans Dietrich, resulting in a difficulty calculation 235 of "very hard" with a score of minus 235. This difficulty calculation is a differential between the selected skill values of awareness 160 and speed 141 for James Melba compared against the skill values of vision 27 and awareness 39 associated with Hans Dietrich.

Thus, the likelihood of Hans Dietrich winning a virtual card match against James Melba is low.

If the first user selects the virtual card for Hans Dietrich, the gaming application 150 is configured to perform a comparative analysis using the selected skills values for each player represented by the virtual playing cards against difficulty levels. A difficulty bracket comprises a range of differential values associated with a difficulty level for the gaming activity. For example, a difficulty level of "easy" could be associated with a range of differential values of zero to -40. In another example, medium difficulty level could be associated with a range of differential values of -41 to -75. The ranges can be stratified as desired.

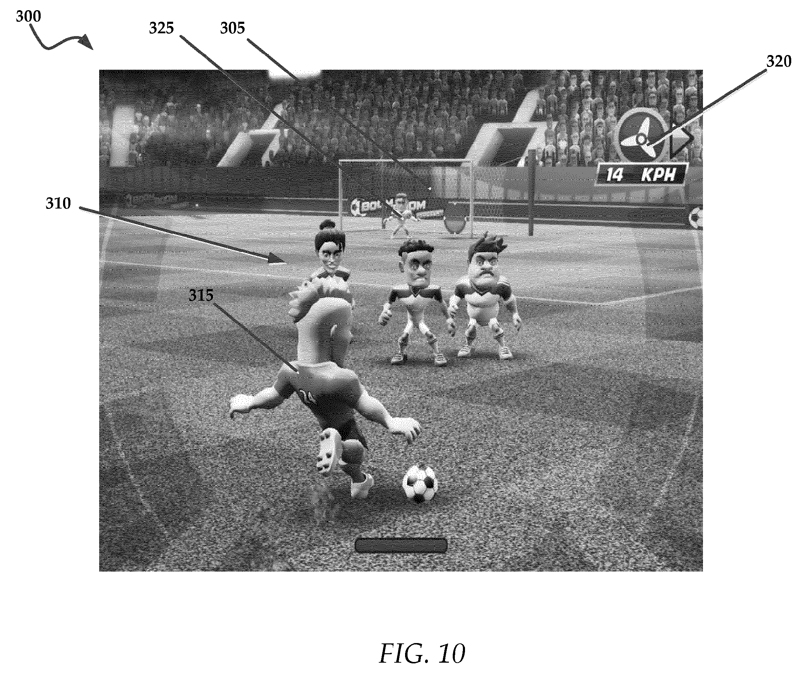

Each of these ranges of differential values associated with a unique difficulty level is likewise linked to selections of activity attributes for a virtual activity. An example virtual activity is illustrated and described with respect to FIG. 10.

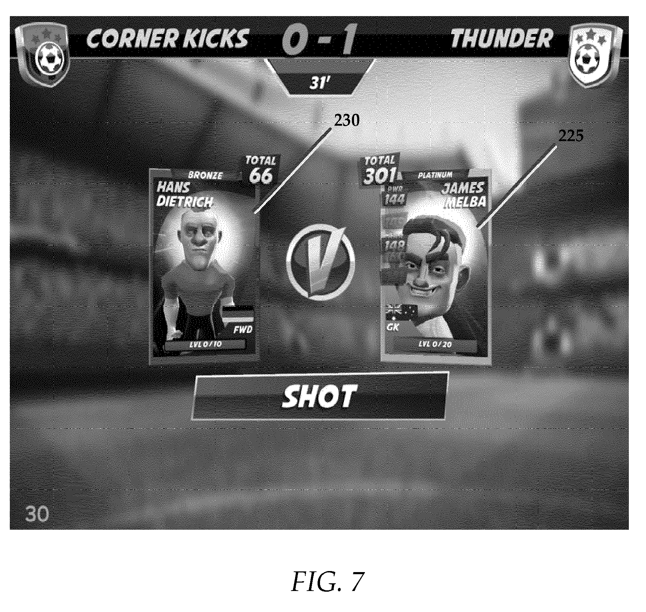

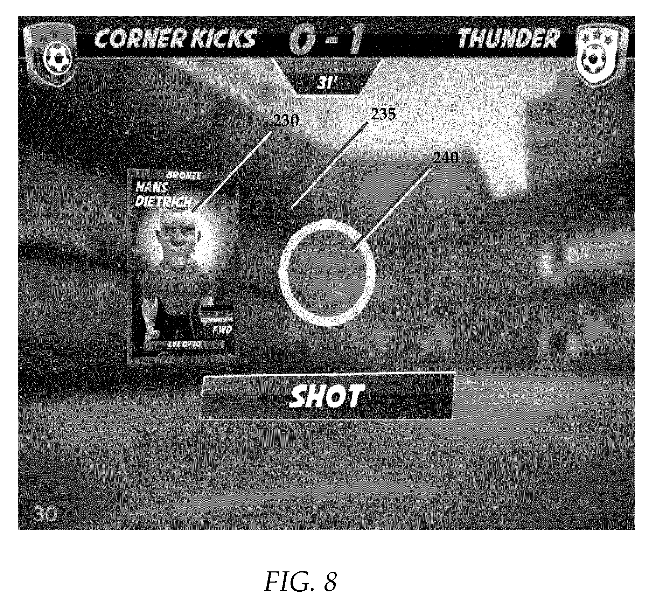

FIGS. 7 and 8 illustrate the initiation of a virtual card battle and a corresponding virtual activity. In detail, FIG. 7 illustrates a head-to-head virtual card match. The outcome of the virtual card match is illustrated in FIG. 8, where as predicted, Hans Dietrich has lost the battle to James Melba by a differential of 235 points. While these embodiments illustrate a differential value that is equal to the difficulty calculation which precedes the actual card battle, it will be understood that the probability calculation used can produce differential values that are different from the difficulty calculation. For example, based on probabilities, the party at a disadvantage based on the differential value may nevertheless win the card battle or lose with a smaller negative differential value that is greater than -235. The magnitude of this differential value is used to select a difficulty level 240 for various attributes of the virtual activity.

FIG. 10 illustrates a virtual activity 300, such as a goal kick activity, which has numerous attributes that have a difficulty (or complexity) level that is selected/affected due to the outcome of the virtual card battle. For example, due to the negative differential value of the outcome of the virtual card game the goal kick comprises a goal 305 which is placed at a severe angle in a first attribute. Additionally, a second attribute includes the placement of three defenders 310 in proximity to the kicker 315. A third attribute includes a distance between the kicker 315 and the goal 305, and yet a fourth attribute includes a 14 kilometer per hour crosswind as indicated by a wind meter 320.

In some embodiments, the skills or behavior of a goalie 325 can be selectively adjusted by the system according to the differential value or the differential value range selected for the differential value.

Thus, other attributes can include a more aggressive goalie or a view of the goal that is out of focus. Another attribute could comprise a target area that is substantially reduced in size or a target area that moves or is unsteady. In some embodiments, the difficulty level comprises a plurality of attributes such as a number of opposing players, environmental conditions, target area or size, aim stabilization, target distance, and various combinations thereof. Each of these attributes can be specifically tailored to the skill values for a player as well. For example, if a player has a vision skill value that is relatively low, an attribute for the virtual activity can include making the goal appear blurry.

By contrast, as the differential value in the virtual card battle approaches zero, fewer negative attributes are selected, or the negativity of some of the attributes are reduced in magnitude. For example, if the differential was negative 100, there may only be one intermediate defender and the wind may be reduced to five kilometers per hour. The kicker can also be placed slightly closer to the goal. As the differential value turns positive, the attributes can skew in favor of the kicker, such as removing the goalie and moving the kicker directly in front of the goal.

The algorithm used to tailor these attributes can vary according to design requirements, but any activity has difficulty attributes that are selected based on an outcome of a preceding virtual card battle. In some embodiments, the virtual card battle can comprise a battle over the same type of activity. For example, the system can conduct a virtual card battle between two virtual cards relative to an action of a corner kick. The virtual activity following the card battle is a corner kick activity involving one of the parties in the virtual card battle.

By way of another example, if the differential value falls within an easy difficulty level, the difficulty level is associated with activity attributes for a virtual activity of: (1) player aligned with a center of the goal; (2) only a slow goalie in front of the goal; and (3) no cross wind. To be sure, this is only an example implementation of the present technology and is not intended to be limiting.

To be sure, the amount or number of activity attributes associated with a difficulty level can increase as difficulty increases. For example, the number of activity attributes for a "hard" difficulty level is five, whereas a number of activity attributes for a "medium" difficulty level are three.

The same principles apply regardless of whether the differential results in a negative difficulty level (negative differential) or a positive difficulty level (positive differential).

The application 150 can utilize pre-determined attributes for activities or can utilize random or skills based attributes for creating the virtual activity. For example, the attributes of defenders, goalie, wind, and distance are selected because the activity is a corner kick. Other virtual activities can result in the selection of different attributes based on the skills selected during card game battles. For example, if a player has a low vision skill score and loses a card battle regarding a free kick, the attributes of a free kick virtual activity could include a small goal target or a goal that is blurry in appearance.

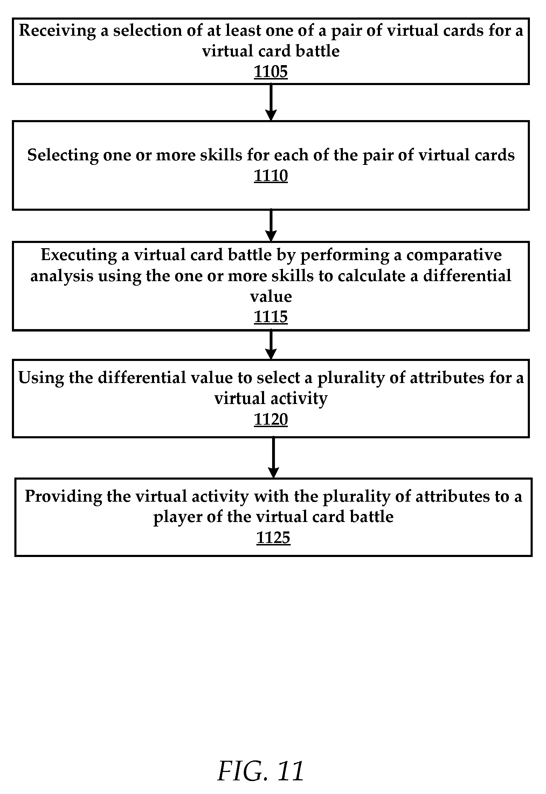

FIG. 11 is a flowchart of an example method of the present disclosure. The method can include a step of selecting a set of virtual cards for a first player, as well as a set of virtual cards for a second player. In some embodiments, one of the players can include the gaming system. The cards selected by a player can be chosen one at a time, on a per-card-battle instance, or alternatively the player can select all of their virtual cards prior to pairwise matching by the system. Thus, the player selects all of the virtual cards they would like to do battle with and the system will respond by making random selections of virtual cards that will be paired with the virtual cards selected by the player.

Regardless of the process used, a virtual card battle can include a pair of the cards, one from a first player and one from a second player. The method can thus include receiving 1105 a selection of at least one of a pair of virtual cards for a virtual card battle. Again, some of the embodiments allow the system to receive selections of both of the pairs of cards when the players are both human players. In embodiments where the system receives a selection of a virtual card from one player and the system then picks the other card for the pair, the system receives only one of the pair of virtual cards.

Once the cards have been selected, the method includes selecting 1110 one or more skills for each of the pair of virtual cards. In the examples provided above, the system can randomly select a skill such as agility, vision, or other skill associated with the cards. Also, the skills for the selected cards may vary according to the subject matter to which the cards belong. For example, virtual cards that represent football athletes may have different skills than virtual cards that represent baseball athletes.

Next, the method comprises executing 1115 a virtual card battle by performing a comparative analysis using the one or more skills to calculate a differential value. Once the differential value has been calculated, the method can include the system using 1120 the differential value to select a plurality of attributes for a virtual activity. As mentioned above, the virtual activity is an interactive version of the virtual card battle.

Advantageously, the system can create new and engaging virtual activities within the confines of a virtual game by allowing the outcomes of virtual card battles to select the logic that is used to create a virtual activity or gaming experience. Each virtual activity has the potential to be a unique gaming instance with its attributes being selected based on the card battle outcomes.

More specifically, the system can selectively alter a difficulty or complexity of a virtual activity as the differential value increases. For example, as the differential value increases the attributes of the virtual activity can increase in number or difficulty. By way of example, if a goal is placed at a distance of 30 meters when the differential value is -100, the goal can be placed at 50 meters when the differential value is -200. Alternatively or additionally, when the differential value moves from -100 to -200 the goal tender may increase in size or agility to block an attempted goal.

Once the system has determined the initial conditions of the virtual activity using the differential value, the method can include providing 1125 the virtual activity with the plurality of attributes to a player of the virtual card battle. An example provision of a virtual activity is illustrated in FIG. 10.

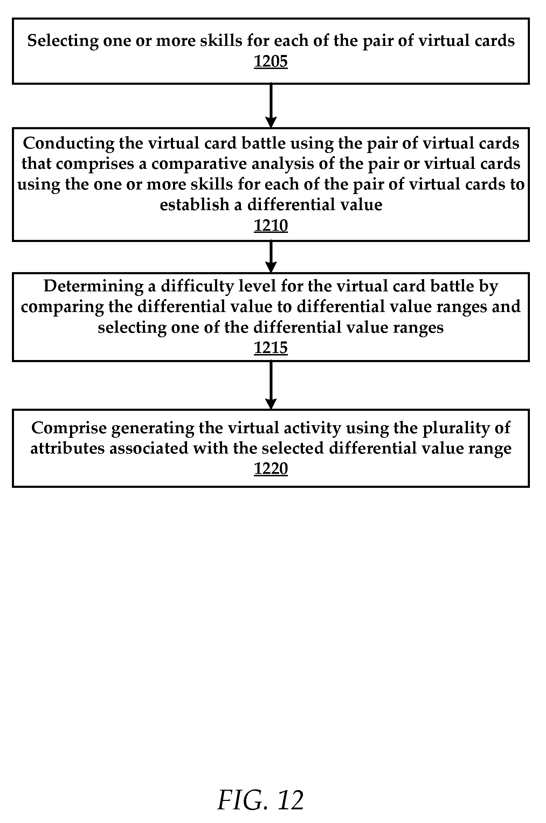

FIG. 12 illustrates a method that utilizes difficulty value ranges in the aforementioned processes. For context, it is assumed that a pair of virtual cards has been selected for a virtual card battle using any of the techniques described above. Also, the method can involve the selection, either randomly by the system or by a player, of the subject matter of the card battle. As mentioned above, the subject matter could include defend or shot. In a defend configuration, the virtual activity would include the player participating in the virtual activity as a goalie or defender, as opposed to the kicker.

The method includes selecting 1205 one or more skills for each of the pair of virtual cards. Again, the one or more skills each have a skill value associated therewith.

Next, the method can include conducting 1210 the virtual card battle using the pair of virtual cards that comprises a comparative analysis of the pair or virtual cards using the one or more skills for each of the pair of virtual cards to establish a differential value.

After the differential value has been calculated, the method includes determining 1215 a difficulty level for the virtual card battle by comparing the differential value to differential value ranges. Again, the differential value ranges are associated with various difficulty levels that define the plurality of attributes. For example, differential values that fall within a difficulty level range of zero to -100 can be labeled as "difficult". A difficulty value range can be associated with a pre-determined set of attributes for a virtual activity. This pre-determination allows the system to operate in a more static manner as opposed to embodiments where the system can intelligently select attributes for a virtual activity based on a magnitude of a differential value. Thus, in some embodiments, all virtual card battles that have a differential value that falls in the "difficult" differential value range will result in a virtual activity with the same set of virtual activity attributes, in comparison with dynamic selection of attributes.

The method can also comprise generating 1220 the virtual activity using the plurality of attributes associated with the selected differential value range.

In some embodiments, the systems of the present disclosure can utilize discrete probability density calculations, differential value look up functions (using a table that includes ranges of differential values associated with difficulty levels), and random number scripting to dynamically select attributes of a virtual activity that are tied to the virtual card battle. By way of example, if the differential value was used to select a difficulty level of "hard" the parameters of the virtual activity, such as a corner kick, could include a number of defenders, an angle of kick, distance from goal, windspeed, and so forth. The system can implement a random number generator function that selects values for each of these parameters. Using a scale of zero to ten, the higher a random number generated by the system, the more difficult the given parameter.

In some embodiments, the method further comprises (a) receiving a selection of first party virtual cards; (b) receiving a selection of second party virtual cards; (c) selecting a pair of virtual cards for a virtual card battle, the pair of virtual cards comprising one of the first party virtual cards and one of the second party virtual cards; (d) selecting one or more skills for each of the pair of virtual cards; (e) performing a comparative analysis of the pair or virtual cards using the one or more skills for each of the pair of virtual cards to establish a differential value; (f) executing a lookup of a table that comprises ranges of differential values, each range being associated with a difficulty level for a virtual activity that is based on the virtual card battle, wherein the lookup determines which of the ranges of differential values that the calculated differential value falls within; (g) performing discrete probability density calculations for each of a plurality of selected virtual activity parameters that define how a player participates within the virtual activity; (h) performing random number scripting to dynamically select values for each of the plurality of selected virtual activity parameters; and (i) executing the virtual activity for the player. An example embodiment of pseudo code illustrating the calculation of differential values used to determine a difficulty value range for a card battle and selection of virtual activity parameters is provided below. The system can utilize a Python script in one embodiment. The example Python script demonstrates match flow to look up values from a table that comprises the difficulty value ranges.

The first portion of the script will generate a random list of values based on a discrete probability density.

```
 def DiscretePDF( dist, count=None):
 returnlist = True
 if count == None:
   returnlist = False
   count = 1
 total = sum( dist.values( ) )
 result = [ ]
 i=0
 while i < count:
   val = random.uniform( 0, total )
   cur = 0
   for k, v in dist.items( ):
      cur += v
      if val <= cur:
        result.append( k )
        break
   i += 1
 if returnlist:
   return result
 else:
   return result[ 0 ]
   def ResolveCardBattle(cardValuePlayer, cardValueOpponent):
 return cardValuePlayer - cardValueOpponent
 def SelectDifficulty(cardBattleDelta):
 difficulty = None
 for difficulty_key, delta_range in tuning["Data"]["DifficultyLevelRanges"].items():
   if cardBattleDelta >= delta_range[0] and cardBattleDelta < delta_range[1]:
      print "Selected", difficulty_key
      difficulty = difficulty_key
      break
 return difficulty
```

The section of the script below provides a selection of a class of the activity, which in this embodiment includes a pass activity:

```
 class Scenario:
 pass
 def play_match():
 card_slots = [
   (194,35),
   (100,350),
   (300,350),
   (954,423),
   (234,290)
 ]
```

A delta value from the virtual card battle is generated below:

```
 for card_slot in card_slots:
   delta = ResolveCardBattle(*card_slot)
   difficulty = SelectDifficulty(delta)
   scenario = Scenario()
   scenario.defenders =
   DiscretePDF(tuning["Data"] ["KickingGames"] ["DefenderDifficultyTuning"] [difficulty]
   )
   scenario.wind =
   random.uniform(*tuning["Data"] ["KickingGames"] ["WindStrengthRange"] [difficulty])
   scenario.shot angle =
   DiscretePDF(tuning["Data"] ["KickingGames"] ["ShotAngle"] [difficulty])
   scenario.shot_distance =
   DiscretePDF(tuning["Data"] ["KickingGames"] ["ShotDistance"] [difficulty])
   print "Player Card Value", card_slot[0]
   print "Opponent Card Value", card_slot[1]
   print "The following are the basic scenario parameters for a Shooting/Passing
   Gameplay scenario,"
   print "Based on the above card values"
   print "These values would feed into the game runtime engine to generate a
   Shooting/Passing attempt visualization."
   print "--------------------------------------"
   print json.dumps(scenario. dict_, indent=4)
   print "--------------------------------------"
```

The following section of the script provides for tuning parameter selection for the interactive game, which selects the attributes using the differential value selected above (also utilizing the difficulty value ranges of the values table), as well as utilizing random number generation to select values for each of activity parameters.

```
 tuning = json.loads(""" {
 "Type": "TuningData",
 "Description": "Tunables used for the interactivity games",
 "Data":
 {
   "FieldMaxX": 33,
   "FieldMaxZ": 52,
   "AttemptTimeOutTime": 2,
   "CardBattleWinBonus": 0,
   "DifficultyLevelRanges":
   {
      "VERY_EASY": [175, 1000000],
      "EASY": [33, 174],
      "MEDIUM": [0, 32],
      "HARD": [-224, -1],
      "VERY_HARD": [-1000000, -225]
   },
   "KickingGames":
   {
      "ChanceToWinOnGoodAction": [0.9, 0.7, 0.4, 0.2, 0.05],
      "TargetColors":
      {
        "BIG": [0.0, 1.0, 0.0],
        "MEDIUM": [1.0, 1.0,0.0],
        "SMALL": [1.0, 0.0, 0.0]
      },
      "TargetColorRanges":
      {
        "SMALL": [0.0, 0.40],
        "MEDIUM": [0.40, 0.75],
        "BIG": [0.75, 1.0]
      },
      "NickingTargetCountsAsHit": false,
      "TimerTotalTime":
      [
        3.0,
        3.0,
        3.0,
        3.0,
        3.0
      ],
      "TimerFlashTime": 0.75,
      "TimeToSlowTime": 0.85,
      "LowHeightKick": 0.1,
      "HighHeightKick": 3.3,
      "MaxCurveForce": 100000,
      "BallPastTargetCutOff": 7.5,
      "MinSwipeSpeedCrossThreshold" : 0.005,
      "DefenderSpacing": 1.0,
      "DefenderWallDist": 8.0,
      "DefenderToMarkSpacingMin": 1.75,
      "DefenderToMarkSpacingMax": 3,
      "ExtrasMinDistSide": 3.0,
      "ExtrasMaxDistSide": 6.0,
      "ExtrasMinDistBall": 0.4,
      "ExtrasMaxDistBall": 0.7,
      "KickerOffset":
      [
        -0.5,
        0.0,
        -5.5
      ],
      "CameraOffset":
      [
        0,
        2.6,
        -9.5
      ],
      "CameraLookAtOffset":
      [
        0,
        1.5,
        0
      ],
      "PreCameraBlendTime": 1.0,
      "PreCameraOffset":
      [
        0,
        4,
        -20
      ]
      "TargetScales": [ 1.1, 0.95, 0.8, 0.7, 0.6 ],
      "TargetVanishChance": [ 0.0, 0.0, 0, 0, 0 ],
      "TargetWhenToVanish": 3.25,
      "WindStrengthRange":
      {
        "VERY_EASY": [0, 0],
        "EASY": [2, 5],
        "MEDIUM": [5, 10],
        "HARD": [10, 15],
        "VERY_HARD": [10, 20]
      },
      "WindChance": [ 0.0, 0.2, 0.5, 0.85, 1.0 ],
      "DefendingScenarios":
      {
        "none" : [],
        "1left" : [{"x": 1.25, "y": 3.0}],
        "1right" : [{"x": -1.25, "y": 3.0}],
        "1closeleft" : [{"x": 0.4, "y": 1.5}],
        "1closeright" : [{"x": -0.4, "y": 1.5}],
        "1centre": [{"x": 0.0, "y": 1.0}],
        "2left": [{"x": -1.0, "y": 1.0}, {"x": 0.5, "y": 1.0}],
        "2farright": [{"x": -0.90, "y": 0.5}, {"x": 1.10, "y": 3.0}],
        "2farleft": [{"x": -1.10, "y": 3.0}, {"x": 0.90, "y": 0.5}],
        "2right": [{"x": -0.5, "y": 1.0}, {"x": 1.0, "y": 1.0}],
        "2closeleft" : [{"x": -1.45, "y": 4.0}, {"x": 0.25, "y": 0}],
        "2closeright" : [{"x": -0.25, "y": 0}, {"x": 1.45, "y": 4.0}],
        "2centreA" : [{"x": -1.4, "y": 0.5}, {"x": 0.0, "y": 0.0}],
        "2centreB" : [{"x": 0.0, "y": 0.0}, {"x": 1.4, "y": 0.5}],
        "2block" : [{"x": -0.4, "y": 0.75}, {"x": 0.4, "y": 3.75}],
        "3left": [{"x": -0.8, "y": 1.25}, {"x": 0.25, "y": 0.5}, {"x": 2.0, "y": 3.5}],
        "3right": [{"x": -2.0, "y": 3.5}, {"x": -0.25, "y": 0.5}, {"x": 0.8, "y": 1.25}],
        "3closeleft" : [{"x": 2.5, "y": 5.0}, {"x": 0.0, "y": 0.0}, {"x": -1.0, "y": 2.5}],
        "3closeright" : [{"x": 1.0, "y": 2.5}, {"x": 0, "y": 0.0}, {"x": -2.5, "y": 5.0}],
        "3centre" : [{"x": -1.2, "y": 3.0}, {"x": 0.0, "y": 5.0}, {"x": 1.2, "y": 2.0}]
      },
      "DefenderDifficultyTuning":
      {
        "VERY EASY":
        {
           "none": 50,
           "1left" : 20,
           "1right" : 20,
           "1closeleft": 5,
           "1closeright": 5
        },
        "EASY" :
        {
           "none" : 10,
           "1left": 30,
           "1right": 30,
           "1closeleft": 10,
           "1closeright": 10,
           "1centre": 10,
           "2left" : 0,
           "2right": 0,
           "2farright" : 0,
           "2farleft" : 0,
           "2closeleft" : 0,
           "2closeright" : 0,
           "2centreA" : 0,
           "2centreB" : 0
        },
        "MEDIUM" :
        {
           "none" : 0,
           "1left" : 0,
           "1right" : 0,
           "1closeleft" : 10,
           "1closeright" : 10,
           "1centre": 10,
           "2left" : 20,
           "2right": 20,
           "2closeleft" : 20,
           "2closeright" : 20,
           "2farright" : 0,
           "2farleft" : 0,
           "2centreA" : 15,
           "2centreB" : 15,
           "2block" : 15,
           "3left": 0,
           "3right": 0,
           "3closeleft" : 0,
           "3closeright" : 0,
           "3centre" : 0
        },
        "HARD" :
        {
           "none": 0,
           "1left": 5,
           "1right" : 5,
           "1closeleft" : 5,
           "1closeright" : 5,
           "1centre": 5,
           "2left" : 10,
           "2right": 10,
           "2closeleft" : 10,
           "2closeright" : 10,
           "2farright" : 0,
           "2farleft" : 0,
           "2centreA" : 10,
           "2centreB" : 10,
           "2block" : 10,
           "3left": 0,
           "3right": 0,
           "3closeleft" : 0,
           "3closeright" : 0,
           "3centre" : 0
        },
        "VERY HARD" :
        {
           "none": 0,
           "1left" : 0,
           "1right" : 0,
           "1closeleft" : 0,
           "1closeright" : 0,
           "1centre" : 0,
           "2left" : 0,
           "2right": 0,
           "2closeleft" : 0,
           "2closeright" : 0,
           "2centreA" : 5,
           "2centreB" : 5,
           "2block" : 5,
           "3left": 15,
           "3right": 15,
           "3closeleft" : 20,
           "3closeright" : 20,
           "3centre" : 15
        }
      },
      "ShotAngle" :
      {
        "VERY_EASY":
        {
           "WideLeft": 0,
           "NearLeft": 10,
           "NoAngle": 80,
           "NearRight": 10,
           "WideRight": 0
        },
        "EASY":
        {
           "WideLeft": 0,
           "NearLeft": 10,
           "NoAngle": 80,
           "NearRight": 10,
           "WideRight": 0
        },
        "MEDIUM":
        {
           "WideLeft": 10,
           "NearLeft": 25,
           "NoAngle": 30,
           "NearRight": 25,
           "WideRight": 10
        },
        "HARD":
        {
           "WideLeft": 20,
           "NearLeft": 20,
           "NoAngle": 20,
           "NearRight": 20,
           "WideRight": 20
        },
        "VERY_HARD":
        {
           "WideLeft": 25,
           "NearLeft": 15,
           "NoAngle": 10,
           "NearRight": 15,
           "WideRight": 25
        }
      },
      "ShotDistance":
      {
        "VERY_EASY":
        {
           "Near": 100,
           "Mid": 0,
           "Far": 0
        },
        "EASY":
        {
           "Near": 50,
           "Mid": 50,
           "Far": 0
        },
        "MEDIUM":
        {
           "Near": 0,
           "Mid": 50,
           "Far": 50
        },
        "HARD":
        {
           "Near": 0,
           "Mid": 0,
           "Far": 100
        },
        "VERY_HARD":
        {
           "Near": 0,
           "Mid": 0,
           "Far": 100
        }
      }
   },
   "ShootingGame" :
   {
      "ShotAngleValues" :
      {
        "WideLeft": -40,
        "NearLeft": -20,
        "NoAngle": 0,
        "NearRight": 20,
        "WideRight": 40
      },
      "ShotDistanceValues" :
      {
        "Near": 20,
        "Mid": 30,
        "Far": 42
      },
      "ShotSpeeds" :
      {
        "Near": 25,
        "Mid": 40,
        "Far": 45
      }
   }
 }
 }
 """)
 play_match()
```

Once the script has been executed to probabilistically determine the attributes of the virtual activity, the virtual activity is executed by a play match script call.

The following sections describe an example game script that is utilized to provide the virtual activity that is selected through execution of the virtual card battle.

The script is used to select from various shot distances:

```
 public enum ShotDistances
 {
 Near,
 Mid,
 Far,
 Invalid
 };
```

The script is used to select from various shot angles:

```
 public enum ShotAngles
 {
 WideLeft,
 NearLeft,
 NoAngle,
 NearRight,
 WideRight,
 Invalid
 };
```

The script is used to select from various ball speeds:

```
 public enum BallSpeed
 {
 Slow,
 Medium,
 Fast,
 Invalid
 };
```

An overall activity difficulty level is calculated and displayed:

```
 //for difficulty meter
 public enum DifficultyLevel
 {
 VERY_EASY = -2,
 EASY,
 MEDIUM,
 HARD,
 VERY_HARD,
 Count = 5,
 Invalid = -100
 }
```

The script is also used to select a class of activity script that involves a kicking game, in this instance:

```
 public class KickingGameScript
 {
   //-------------------------------------------------------------------------
   //
   //
   //
   //-------------------------------------------------------------------------
   public static DifficultyLevel GetDifficultyLevel(int playerDifference,
   DifficultyLevel diffLevel = DifficultyLevel.Count)
   {
      if (diffLevel == DifficultyLevel.Count)
      {
        if (Interactivity.Util.Tuning == null)
        {
           Interactivity.Util.RefreshTuning();
        }
        foreach (KeyValuePair<DifficultyLevel, List<int>> pair in
        Interactivity.Util.Tuning.DifficultyLevelRanges)
        {
           List<int> range = pair.Value;
           if (range[0] <= playerDifference && playerDifference <= range[1])
           {
             for (int i = (int)DifficultyLevel.VERY_EASY; i <=
             (int)DifficultyLevel.VERY_HARD; i++)
             {
                if (pair.Key == ((DifficultyLevel)i))
                {
                  diffLevel = pair.Key;
                }
             }
           }
        }
      }
      return diffLevel;
   }
   public int GetCurrentPlayerDifference()
   {
      return user.player[current_slot_index] - opponent.player[current_slot_index];
   }
   public DifficultyLevel GetDifficultyLevel()
   {
      return MatchFlowUtil.GetDifficultyLevel(GetCurrentPlayerDifference(),
      tut_GetDifficultyLevelOverride());
   }
   protected ShotDistances GetShotDistance()
   {
      if (eCurrentShotDistance == ShotDistances.Invalid)
      {
        eCurrentShotDistance =
        random.DiscretePDF(Util.Tuning.KickingGames.ShotDistance[GetDifficultyLevel()])[
        0];
        if(tut_GetOverrideShotDistance() != ShotDistances.Invalid)
        {
           eCurrentShotDistance = tut_GetOverrideShotDistance();
        }
        if (eOverrideShotDistance != ShotDistances.Invalid)
        {
           eCurrentShotDistance = eOverrideShotDistance;
        }
      }
      return eCurrentShotDistance;
   }
   protected ShotAngles GetShotAngle()
   {
      if (eCurrentShotAngle == ShotAngles.Invalid)
      {
        eCurrentShotAngle =
        random.DiscretePDF(Util.Tuning.KickingGames.ShotAngle[GetDifficultyLevel()])[0];
        if(tut_GetOverrideShotAngle() != ShotAngles.Invalid)
        {
           eCurrentShotAngle = tut_GetOverrideShotAngle();
        }
        if (eOverrideShotAngle != ShotAngles.Invalid)
        {
           eCurrentShotAngle = eOverrideShotAngle;
        }
      }
      return eCurrentShotAngle;
   }
   override protected float GetShotDistanceValue()
   {
      return Util.Tuning.ShootingGame.ShotDistanceValues[GetShotDistance()];
   }
   override protected float GetShotAngleValue()
   {
      return Util.Tuning.ShootingGame.ShotAngleValues[GetShotAngle()];
   }
   override protected float GetShotSpeed()
   {
      return Util.Tuning.ShootingGame.ShotSpeeds[eCurrentShotDistance];
   }
   // This is where we take the values
   protected override void SetupNewAttempt()
   {
      ResetCharacterInstances();
      EnableAllInteractiveCharacters(false);
      PopulateBackgroundCharacters(playerInitData, nonKeeperSlots,
      teamPlayerInstances, mInputData.SelectedPlayers);
      PopulateBackgroundCharacters(opponentInitData, nonKeeperSlots,
      defenderInstances, mInputData.SelectedOpponents);
      CharacterInitData playerKeeperInitData = new CharacterInitData();
      playerKeeperInitData.teamSlot = TeamSlotType.K;
      playerKeeperInitData.playerGO = PlayerGoalie;
      playerInitData.Add(playerKeeperInitData);
      ReplaceCharacterModels(Kicker, OpponentGoalie);
      //Distance
      eCurrentShotDistance = GetShotDistance();
      float fDistance = GetShotDistanceValue();
      fShotAngle = GetShotAngleValue();
      float x = fDistance * Mathf.Sin(Mathf.Deg2Rad * fShotAngle);
      float z = fDistance * Mathf.Cos(Mathf.Deg2Rad * fShotAngle);
      v3MomentOrigin = v3KickToPos + new Vector3(x,
      BallPrefab.transform.lossyScale.x / 2.0f, -z);
      //Kicker
      Vector3 kickerPosition = new Vector3(v3MomentOrigin.x, 0.0f,
      v3MomentOrigin.z);
      Kicker.transform.position = kickerPosition;
      Kicker.transform.LookAt(v3KickToPos);
      //Rotate the kicker's offset too.
      Vector3 kickerOffset = new
      Vector3(Util.Tuning.KickingGames.KickerOffset[0],
      Util.Tuning.KickingGames.KickerOffset[1],
      Util.Tuning.KickingGames.KickerOffset[2]);
      Vector3 kickerRotatedOffset = Kicker.transform.rotation * kickerOffset;
      Vector3 correctedKickerPosition = kickerPosition + kickerRotatedOffset;
      Kicker.transform.position = correctedKickerPosition;
      // create the ball at the kicker, so it doesn't move around when attached
      Quaternion identityRotation = Quaternion.identity;
      Instantiate(BallPrefab, correctedKickerPosition, identityRotation);
      GameObject ball = Interactivity.Ball.GetInstance();
      Debug.DrawLine(ball.transform.position, ball.transform.position + Vector3.up *
      2.0f, Color.red, 10.0f);
      ball.transform.parent = tempObjects;
      ball.GetComponent<Ball>().TrajectoryPredictedEvent += new
      Traj ectoryPredictedEventHandler(Traj ectoryPredicted);
      //Set the kick speed.
      float fKickSpeed = GetShotSpeed();
      BallKicker2 ballKickScript = Kicker.GetComponent<BallKicker2>();
      if ( ballKickScript != null )
      {
        ballKickScript.SetKickSpeed(fKickSpeed);
      }
      ////////////////////////////////
      // Goalie
      Vector3 netToBall = v3MomentOrigin - v3KickToPos;
      Vector3 v3GoaliePosition = v3KickToPos + netToBall.normalized *
      GoalieDistOffGoalline;
      OpponentGoalie.transform.position = v3GoaliePosition;
      OpponentGoalie.transform.LookAt(new Vector3(v3MomentOrigin.x, 0.0f,
      v3MomentOrigin.z));
      if (OpponentGoalie != null)
      {
        AIKickInterceptorScript goalieScript =
        OpponentGoalie.GetComponent<AIKickInterceptorScript>();
        if (goalieScript != null)
        {
           goalieScript.Reset(v3GoaliePosition, v3MomentOrigin);
           goalieScript.TouchBallEvent += GoalieTouchedBall;
        }
      }
      base. SetupNewAttempt();
      mCameraBlender.StartBlend();
   }
   Team user;
   Team opponent;
   int current_slot_index;
   void PlayGame(Team user, Team opponent)
   {
      this.user = user;
      this.opponent = opponent;
      int num_players = 5;
      for(int i = 0; i < num_players; i++)
      {
        this.current_slot_index = i;
        SetupNewAttempt();
        WaitForAttemptToComplete();
      }
   }
   }
```

FIG. 13 illustrates an exemplary computing device 1 that may be used to implement an embodiment of the present systems and methods. The system 1 of FIG. 13 may be implemented in the contexts of the likes of computing devices, networks, servers, or combinations thereof. The computing device 1 of FIG. 13 includes one or more processors 10 and main memory 20. Memory 20 stores, in part, instructions and data for execution by processor 10. Memory 20 may store the executable code when in operation. The system 1 of FIG. 13 further includes a mass storage device 30, portable storage device 40, output devices 50, user input devices 60, a display system 70, and peripheral devices 80.

The components shown in FIG. 13 are depicted as being connected via a single bus 90. The components may be connected through one or more data transport means. Processor 10 and memory 20 may be connected via a local microprocessor bus, and the mass storage device 30, peripheral device(s) 80, portable storage device 40, and display system 70 may be connected via one or more input/output (I/O) buses.

Mass storage device 30, which may be implemented with a magnetic disk drive or an optical disk drive, is a non-volatile storage device for storing data and instructions for use by processor unit 10. Mass storage device 30 may store the system software for implementing embodiments of the present technology for purposes of loading that software into main memory 20.

Portable storage device 40 operates in conjunction with a portable non-volatile storage medium, such as a floppy disk, compact disk, digital video disc, or USB storage device, to input and output data and code to and from the computer system 1 of FIG. 13. The system software for implementing embodiments of the present technology may be stored on such a portable medium and input to the computer system 1 via the portable storage device 40.

User input devices 60 provide a portion of a user interface. User input devices 60 may include an alphanumeric keypad, such as a keyboard, for inputting alpha-numeric and other information, or a pointing device, such as a mouse, a trackball, stylus, or cursor direction keys. Additional user input devices 60 may comprise, but are not limited to, devices such as speech recognition systems, facial recognition systems, motion-based input systems, gesture-based systems, and so forth. For example, user input devices 60 may include a touchscreen. Additionally, the system 1 as shown in FIG. 2 includes output devices 50. Suitable output devices include speakers, printers, network interfaces, and monitors.

Display system 70 may include a liquid crystal display (LCD) or other suitable display device. Display system 70 receives textual and graphical information, and processes the information for output to the display device.

Peripherals device(s) 80 may include any type of computer support device to add additional functionality to the computer system. Peripheral device(s) 80 may include a modem or a router.

The components provided in the computer system 1 of FIG. 2 are those typically found in computer systems that may be suitable for use with embodiments of the present technology and are intended to represent a broad category of such computer components that are well known in the art. Thus, the computer system 1 of FIG. 2 may be a personal computer, hand held computing device, telephone, mobile computing device, workstation, server, minicomputer, mainframe computer, or any other computing device. The computer may also include different bus configurations, networked platforms, multi-processor platforms, etc. Various operating systems may be used including Unix, Linux, Windows, Mac OS, Palm OS, Android, iOS (known as iPhone OS before June 2010), QNX, and other suitable operating systems.

It is noteworthy that any hardware platform suitable for performing the processing described herein is suitable for use with the systems and methods provided herein. Computer-readable storage media refer to any medium or media that participate in providing instructions to a central processing unit (CPU), a processor, a microcontroller, or the like. Such media may take forms including, but not limited to, non-volatile and volatile media such as optical or magnetic disks and dynamic memory, respectively. Common forms of computer-readable storage media include a floppy disk, a flexible disk, a hard disk, magnetic tape, any other magnetic storage medium, a CD-ROM disk, digital video disk (DVD), any other optical storage medium, RAM, PROM, EPROM, a FLASHEPROM, any other memory chip or cartridge.

Computer program code for carrying out operations for aspects of the present technology may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be coupled with the user's computer through any type of network, including a local area network (LAN) or a wide area network (WAN), or the connection may be made to an external computer (for example, through the Internet using an Internet Service Provider).

The corresponding structures, materials, acts, and equivalents of all means or step plus function elements in the claims below are intended to include any structure, material, or act for performing the function in combination with other claimed elements as specifically claimed. The description of the present technology has been presented for purposes of illustration and description, but is not intended to be exhaustive or limited to the present technology in the form disclosed. Many modifications and variations will be apparent to those of ordinary skill in the art without departing from the scope and spirit of the present technology. Exemplary embodiments were chosen and described in order to best explain the principles of the present technology and its practical application, and to enable others of ordinary skill in the art to understand the present technology for various embodiments with various modifications as are suited to the particular use contemplated.

Aspects of the present technology are described above with reference to flowchart illustrations and/or block diagrams of methods, apparatus (systems) and computer program products according to embodiments of the present technology. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the Figures illustrate the architecture, functionality, and operation of possible implementations of systems, methods and computer program products according to various embodiments of the present technology. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

Particular aspects of the subject-matter disclosed herein are also set out in the following numbered clauses:
Clause 1: A method, comprising: receiving a selection of at least one of a pair of virtual cards for a virtual card battle; selecting one or more skills for each of the pair of virtual cards; executing a virtual card battle by performing a comparative analysis using the one or more skills to calculate a differential value; using the differential value to select a plurality of attributes for a virtual activity, wherein the virtual activity is an interactive version of the virtual card battle; and providing the virtual activity with the plurality of attributes to a player of the virtual card battle.
Clause 2: The method according to clause 1, wherein a first of the pair of virtual cards belongs to the player and a second of the pair of virtual cards belongs to a second player.
Clause 3: The method according to clause 1 or 2, wherein the one or more skills are randomly selected by a virtual gaming system.
Clause 4: The method according to clause 1, 2 or 3, further comprising displaying the differential value in proximity to the pair of virtual cards.
Clause 5: The method according to any of the preceding clauses, wherein the plurality of attributes selected for the virtual activity comprises a difficulty level that is increased or decreased.
Clause 6: The method according to clause 5, wherein the difficulty level is increased or decreased according to a magnitude of the differential value.
Clause 7: The method according to clause 5 or 6, wherein a number of the plurality of attributes is increased or decreased according to a magnitude of the differential value.
Clause 8: The method according to any of the preceding clauses, further comprising determining a difficulty level for the virtual card battle by comparing the differential value to differential value ranges, the differential value ranges being associated with various difficulty levels that define the plurality of attributes.
Clause 9: A method, comprising: receiving a selection of first party virtual cards; receiving a selection of second party virtual cards; selecting a pair of virtual cards for a virtual card battle, the pair of virtual cards comprising one of the first party virtual cards and one of the second party virtual cards; selecting one or more skills for each of the pair of virtual cards; performing a comparative analysis of the pair or virtual cards using the one or more skills for each of the pair of virtual cards to establish a differential value; and selecting a plurality of attributes for a virtual activity using the differential value, wherein the virtual activity is an interactive version of the virtual card battle.
Clause 10: The method according to clause 9, wherein the comparative analysis further comprises comparing the one or more skills for each of the pair of virtual cards against difficulty level ranges to calculate the differential value.
Clause 11: The method according to clause 9 or 10, further comprising executing the virtual activity with the plurality of attributes for a player of the virtual card battle.
Clause 12: A method, comprising: selecting one or more skills for each of the pair of virtual cards, wherein the one or more skills each having a skill value; randomly selecting a virtual card battle type for a virtual card battle; conducting the virtual card battle using the pair of virtual cards that comprises a comparative analysis of the pair of virtual cards using the one or more skills for each of the pair of virtual cards to establish a differential value; and creating a virtual activity having a selected difficulty level, using the differential value, wherein the virtual activity is an interactive version of the virtual card battle.
Clause 13: The method according to clause 12, wherein each of the pair of virtual cards represents an athlete.
Clause 14: The method according to clause 13, wherein the one or more skills are related to a sport associated with the athlete.
Clause 15: The method according to clause 14, wherein the virtual activity is a three dimensional sports activity that is related to the sport.
Clause 16: The method according to any of clauses 12-15, wherein the difficulty level comprises a plurality of attributes selected from any of number of opposing players, environmental conditions, target area or size, aim stabilization, target distance, and combinations thereof.
Clause 17: The method according to any of clauses 12-16, wherein the difficulty level is increased or decreased according to a magnitude of the differential value.
Clause 18: The method according to any of clauses 12-17, wherein the pair of virtual cards are randomly selected.
Clause 19: The method according to any of clauses 12-18, wherein attributes selected for the virtual activity are selected based on a subject matter of the virtual card battle.
Clause 20: The method according to clause 19, wherein the attributes are further selected based on a difficulty level range into which the differential value falls.

While various embodiments have been described above, it should be understood that they have been presented by way of example only, and not limitation. The descriptions are not intended to limit the scope of the technology to the particular forms set forth herein. Thus, the breadth and scope of a preferred embodiment should not be limited by any of the above-described exemplary embodiments. It should be understood that the above description is illustrative and not restrictive. To the contrary, the present descriptions are intended to cover such alternatives, modifications, and equivalents as may be included within the spirit and scope of the technology as defined by the appended claims and otherwise appreciated by one of ordinary skill in the art. The scope of the technology should, therefore, be determined not with reference to the above description, but instead should be determined with reference to the appended claims along with their full scope of equivalents.

## Claims

1. A computer-implemented method, comprising:
receiving (1105) a selection of first party virtual cards;
receiving (1105) a selection of second party virtual cards;
selecting a pair of virtual cards for a virtual card battle, the pair of virtual cards comprising one of the first party virtual cards and one of the second party virtual cards;
selecting (1110) one or more skills for each of the pair of virtual cards;
performing (1115) a comparative analysis of the pair of virtual cards using the one or more skills for each of the pair of virtual cards to establish a differential value (215);
executing a lookup of a table that comprises ranges of differential values, each range being associated with a difficulty level (240) for a virtual activity (300) that is based on the virtual card battle, wherein the lookup determines which of the ranges of differential values that the calculated differential value (215) falls within;
performing discrete probability density calculations for each of a plurality of selected virtual activity parameters that define how a player participates within the virtual activity (300); and
performing random number scripting to dynamically select values for each of the plurality of selected virtual activity parameters; and
executing (1125) the virtual activity (300) for the player.

2. The method according to claim 1, wherein a first of the pair of virtual cards belongs to the player and a second of the pair of virtual cards belongs to a second player.

3. The method according to claim 1 or 2, wherein the one or more skills are randomly selected by a virtual gaming system.

4. The method according to claim 1, 2 or 3, further comprising displaying the differential value (215) in proximity to the pair of virtual cards.

5. The method according to any of the preceding claims, further comprising using the differential value (215) to select a plurality of attributes for the virtual activity (300), wherein the plurality of attributes selected for the virtual activity (300) comprises the difficulty level (235) that is increased or decreased.

6. The method according to claim 5, wherein the difficulty level (235) is increased or decreased according to a magnitude of the differential value (215).

7. The method according to claim 5 or 6, wherein a number of the plurality of attributes is increased or decreased according to a magnitude of the differential value (215).

8. The method according to claim 5, 6 or 7, further comprising determining the difficulty level (240) for the virtual card battle by comparing the differential value (215) to the ranges of differential values, the ranges of differential values being associated with various difficulty levels that define the plurality of attributes.

9. The method according to any of the preceding claims, wherein the comparative analysis further comprises comparing the one or more skills for each of the pair of virtual cards against difficulty level ranges to calculate the differential value (215).

10. The method according to any of the preceding claims, further comprising selecting a plurality of attributes for the virtual activity (300) using the differential value (215) and executing the virtual activity (300) with the plurality of attributes for the player of the virtual card battle, wherein the virtual activity (300) is preferably an interactive version of the virtual card battle.

11. The method according to any of the preceding claims, wherein each of the pair of virtual cards represents an athlete.

12. The method according to claim 11, wherein the one or more skills are related to a sport associated with the athlete, and wherein the virtual activity (300) is preferably a three dimensional sports activity that is related to the sport.

13. The method according to any of the preceding claims, wherein the difficulty level (240) comprises a plurality of attributes selected from any of number of opposing players, environmental conditions, target area or size, aim stabilization, target distance, and combinations thereof.

14. The method according to any of the preceding claims, wherein the pair of virtual cards is randomly selected.

15. The method according to any of the preceding claims, wherein attributes selected for the virtual activity (300) are selected based on a subject matter of the virtual card battle, and wherein the attributes are further selected based on a difficulty level range into which the differential value (240) falls.
